(19) Europäisches Patentamt
European Patent Office
Office européen des brevets

(11) **EP 0 882 957 B1**

(12) **EUROPÄISCHE PATENTSCHRIFT**

(45) Veröffentlichungstag und Bekanntmachung des Hinweises auf die Patenterteilung:
**03.09.2008 Patentblatt 2008/36**

(51) Int Cl.:
*G01F 23/284* (2006.01)

(21) Anmeldenummer: **98109742.1**

(22) Anmeldetag: **28.05.1998**

(54) **Verfahren zur Messung des Füllstands eines Füllguts in einem Behälter nach dem Radarprinzip**

Method for material level measurement in a container according to the radar principle

Procédé de mesure du niveau d'un matériau dans un réservoir suivant le principe radar

(84) Benannte Vertragsstaaten:
**DE FR GB IT**

(30) Priorität: **05.06.1997 DE 19723646**

(43) Veröffentlichungstag der Anmeldung:
**09.12.1998 Patentblatt 1998/50**

(73) Patentinhaber: **Endress + Hauser GmbH + Co. KG**
**79689 Maulburg (DE)**

(72) Erfinder:
• **Fitsch, Carsten**
**79713 Bad Säckingen (DE)**
• **Lubcke, Wolfgang**
**79585 Steinen (DE)**
• **Gerst, Peter**
**79576 Weil/Rhein (DE)**
• **Lau, Jürgen**
**79541 Lörrach (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
EP-A- 0 591 816          DE-A- 4 327 333
DE-A- 4 332 071

## Beschreibung

Die Erfindung betrifft ein Verfahren zur Messung des Füllstands eines Füllguts in einem Behälter nach dem Radarprinzip, bei welchem mittels der oberhalb des höchsten vorkommenden Füllstands angeordneten Antenne eines Entfernungsmeßgeräts Mikrowellen nach unten ausgestrahlt und reflektierte Mikrowellen empfangen werden und die empfangenen Mikrowellen zur Bestimmung der an der Füllgutoberfläche reflektierten Echowellen, zur Messung der Laufzeit der Echowellen und zur Berechnung der Entfernung der Füllgutoberfläche von der Antenne des Entfernungsmeßgeräts aus der gemessenen Laufzeit ausgewertet werden.

Der zu messende Füllstand im Behälter ist entweder die Füllhöhe, also die Höhe der Füllgutoberfläche über dem Behälterboden, oder das Füllgutvolumen. Das vorstehend angegebene bekannte Verfahren ergibt unmittelbar die Füllhöhe als die Differenz zwischen der bekannten Einbauhöhe der Antenne über dem Behälterboden und der gemessenen Entfernung der Füllgutoberfläche von der Antenne. Das Füllgutvolumen steht für jeden Behälter in einer eindeutigen Beziehung zu der Füllhöhe und ergibt sich daher aus der gemessenen Füllhöhe.

Wenn bei der Anwendung dieses Verfahrens der Behälter leer ist, werden die Mikrowellen anstatt an der Füllgutoberfläche am Behälterboden reflektiert. Dies verursacht kein Problem, wenn der Behälterboden eben ist. Die Mikrowellen werden in diesem Fall auf direktem Weg zur Antenne reflektiert, und ihre Laufzeit entspricht der Entfernung zwischen der Antenne und dem Behälterboden; diese Entfernung wird als Leerdistanz bezeichnet. Da die Leerdistanz die größte vorkommende Entfernung ist, braucht die Auswertung der empfangenen Mikrowellen im Entfernungsmeßgerät nur in dem Entfernungsbereich zu erfolgen, der bis zu dieser Leerdistanz geht.

Aus der EP 0 591 816 A2 ist ein Verfahren zur Messung des Füllstandes einer Flüssigkeit in einem Behälter nach dem Radarprinzip bekannt geworden. Ein Mikrowellensignal wird in den Behälter abgestrahlt. Ausgewertet werden anschließend die an der Oberfläche der Flüssigkeit und dem Boden des Behälters reflektierten Meßsignale. Hierbei ist der tatsächliche Abstand zwischen der Sende-/Empfangsantenne und dem Behälterboden bekannt. Weiterhin sind die Dielektrizitätszahl und die Permeabilitätszahl der Flüssigkeit zumindest annähernd bekannt. Die tatsächliche Füllstandshöhe der Flüssigkeit in dem Behälter wird rechnerisch aus der Laufzeit des Bodensignals, dem tatsächlichen Bodenabstand, der Dielektrizitätszahl und der Permeabilitätszahl der Flüssigkeit zumindest annähernd bestimmt.

Wenn jedoch dieses Verfahren bei einem Behälter mit gekrümmtem Behälterboden, beispielsweise mit einem sogenannten Klöpperboden angewendet wird, werden die Mikrowellen bei leerem Behälter an dem gekrümmten Behälterboden wegen des von 90° verschiedenen Einfallswinkels nicht auf direktem Weg zu der Antenne reflektiert, sondern sie gelangen erst nach mehrfachen Reflexionen an den Behälterwänden zur Antenne. Die Laufzeit der Mikrowellen entspricht daher einer Entfernung, die wesentlich größer als die Leerdistanz ist. Wenn die Auswertung der empfangenen Mikrowellen nur in dem Entfernungsbereich erfolgt, der bis zur Leerdistanz geht, werden in diesem Fall überhaupt keine Echowellen festgestellt; das Entfernungsmeßgerät zeigt daher nicht den Leerzustand des Behälters an, sondern einen Fehlerzustand.

Zur Lösung dieses Problems erfolgt bisher bei Behältern mit gekrümmtem Behälterboden die Auswertung der empfangenen Mikrowellen dauernd in einem Entfernungsbereich, der sehr viel größer als die Leerdistanz ist. Allen gemessenen Laufzeiten der Echowellen, die zwischen der dem maximalen Füllstand (100%) entsprechenden kürzesten Laufzeit und einer einem sehr kleinen Füllstand (beispielsweise 0,01%) entsprechenden Laufzeit liegen, wird der richtige Füllstand zugeordnet; allen größeren Laufzeiten wird ein Füllstand von 0% zugeordnet.

Ein Nachteil dieser bisher angewendeten Lösung besteht darin, daß immer ein sehr großer Zeit- bzw. Entfernungsbereich ausgemessen werden muß, also auch im normalen Meßbetrieb bei teilweise oder ganz gefülltem Behälter.

Aufgabe der Erfindung ist die Schaffung eines Verfahrens der eingangs angegebenen Art, bei dem im normalen Meßbetrieb bei einem teilweise oder ganz gefüllten Behälter mit gekrümmtem Behälterboden die Auswertung der empfangenen Mikrowellen auf den Entfernungsbereich beschränkt bleiben kann, der bis zur Leerdistanz geht, und bei dem dennoch der Leerzustand des Behälters mit Sicherheit erkannt und angezeigt wird.

Nach der Erfindung wird diese Aufgabe dadurch gelöst, daß im normalen Meßbetrieb die empfangenen Mikrowellen in dem Entfernungsbereich bis zu der dem Abstand der Antenne vom Behälterboden entsprechenden Leerdistanz ausgewertet werden, und daß dann, wenn in diesem Entfernungsbereich keine Echowellen festgestellt werden, die Auswertung in einem erweiterten Entfernungsbereich erfolgt und die in dem erweiterten Entfernungsbereich jenseits der Leerdistanz festgestellten Echowellen der Leerdistanz zugeordnet werden.

Bei Anwendung des erfindungsgemäßen Verfahrens ist die Auswertung der empfangenen Mikrowellen zunächst immer auf den Entfernungsbereich beschränkt, der bei der Leerdistanz endet. Nur wenn in diesem Entfernungsbereich keine Echowellen festgestellt werden, was insbesondere bei leerem Behälter der Fall ist, erfolgt die Auswertung in dem erweiterten Entfernungsbereich. Wenn in diesem erweiterten Entfernungsbereich jenseits der Leerdistanz Echowellen festgestellt werden, steht fest, daß sie von Reflexionen an dem gekrümmten Behälterboden stammen und daß der Behälter leer ist. Wenn dagegen auch in dem erweiterten Entfernungsbereich keine Echowellen festgestellt werden, steht fest, daß ein Fehlerzustand besteht, der angezeigt werden kann.

Sobald wieder Echowellen in dem Entfernungsbereich festgestellt werden, der bis zur Leerdistanz geht, unterbleibt die Erweiterung des Entfernungsbereichs, die somit auf den relativ seltenen Sonderfall des leeren Behälters beschränkt wird.

Der erweiterte Entfernungsbereich wird mindestens so groß bemessen, daß darin alle Echowellen erfaßt werden, die an dem gekrümmten Behälterboden reflektiert werden und nach Mehrfachreflexionen an der Antenne eintreffen. Zur Vereinfachung kann der erweiterte Entfernungsbereich gleich dem maximalen Meßbereich des Entfernungsmeßgeräts gemacht werden.

Der durch die Erfindung erzielte Vorteil tritt besonders deutlich in Erscheinung, wenn gemäß einer bevorzugten Ausführungsform zur Auswertung der empfangenen Mikrowellen deren Echoprofil in dem für die Auswertung vorgesehenen Entfernungsbereich aufgezeichnet wird. In diesem Fall ist die Erfassung der empfangenen Mikrowellen und die Aufzeichnung ihres Echoprofils für die weit überwiegende Anzahl von Meßvorgängen auf den verhältnismäßig kleinen Entfernungsbereich beschränkt, der bis zur Leerdistanz geht.

Weitere Merkmale und Vorteile der Erfindung ergeben sich aus der folgenden Beschreibung eines Ausführungsbeispiels anhand der Zeichnung. In der Zeichnung zeigen:

Fig. 1     schematisch eine Anordnung zur Messung des Füllstands nach dem Radarprinzip in einem Behälter mit gekrümmtem Behälterboden bei teilweise gefülltem Behälter und

Fig. 2     die Anordnung von Fig. 1 bei leerem Behälter.

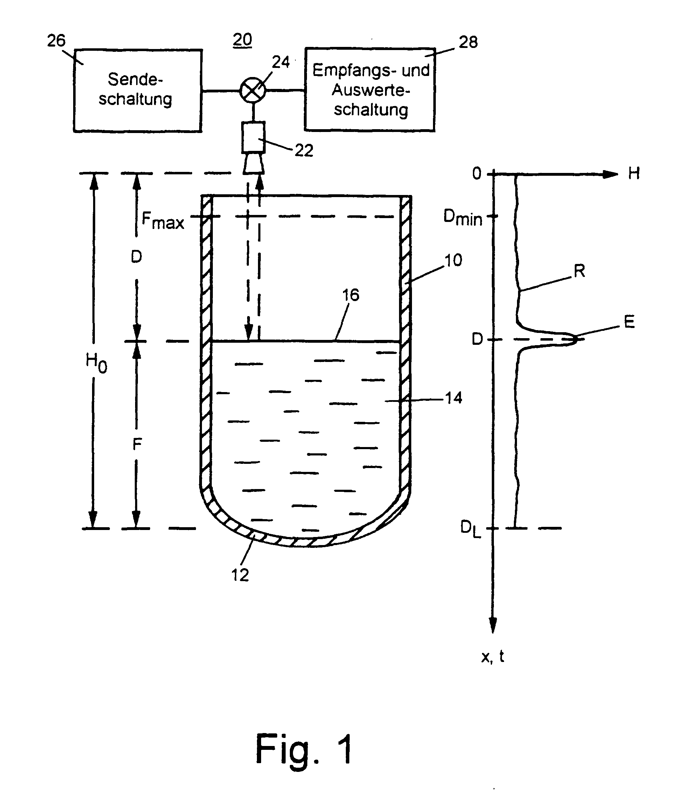

Fig. 1 der Zeichnung zeigt einen Behälter 10 mit einem gekrümmten Behälterboden 12, beispielsweise einem sogenannten Klöpperboden. Der Behälter 10 ist bis zu einer Höhe F mit einem Füllgut 14 gefüllt. Als Füllstand im Behälter 10 wird entweder die Füllhöhe F oder das der Füllhöhe F entsprechende Volumen des Füllguts 14 bezeichnet. Bei einem Behälter, der über seine ganze Höhe einen gleichbleibenden Querschnitt hat, ist das Füllgutvolumen der Füllhöhe F proportional; bei Behältern, bei denen diese Voraussetzung nicht erfüllt ist, läßt sich der Zusammenhang zwischen der Füllhöhe F und dem Füllgutvolumen rechnerisch oder experimentell bestimmen und durch eine Kurve oder Tabelle darstellen. In jedem Fall genügt zur Bestimmung des Füllstands im Behälter die Messung der Füllhöhe F.

Bei dem in Fig. 1 dargestellten Behälter 10 erfolgt die Messung der Füllhöhe F durch ein mit Mikrowellen nach dem Pulsradarprinzip arbeitendes Entfernungsmeßgerät 20. Das Entfernungsmeßgerät 20 enthält eine Sende- und Empfangs-Antenne 22, die über eine Sende-Empfangs-Weiche 24 mit einer Sendeschaltung 26 und mit einer Empfangs- und Auswerteschaltung 28 verbunden ist. Die Sendeschaltung 26 erzeugt in periodischen Zeitabständen Ultrahochfrequenzimpulse, die der Antenne 22 zugeführt werden. Die Antenne 22 ist oberhalb der höchsten Füllhöhe $F_{max}$, die im Behälter 10 vorkommen kann, so angeordnet, daß sie die von der Sendeschaltung 26 kommenden Ultrahochfrequenzimpulse in Form von Mikrowellen senkrecht nach unten abstrahlt und von unten kommende Mikrowellen empfängt. Die von der Antenne 22 empfangenen Mikrowellen, zu denen insbesondere die an der Oberfläche 16 des Füllguts 14 reflektierten Echowellen gehören, werden der Empfangs- und Auswerteschaltung 28 zugeführt. In der Empfangs- und Auswerteschaltung 28 werden die von der Antenne 22 empfangenen Mikrowellen ausgewertet, um die an der Füllgutoberfläche reflektierten Echowellen zu bestimmen und deren Laufzeit zu messen. Aus der gemessenen Laufzeit zwischen dem Zeitpunkt der Aussendung eines Mikrowellenimpulses durch die Antenne 22 und dem Eintreffen des an der Füllgutoberfläche 16 reflektierten Echoimpulses an der Antenne 22 kann aufgrund der bekannten Ausbreitungsgeschwindigkeit der Mikrowellen die Entfernung D zwischen der Antenne 22 und der Füllgutoberfläche 16 berechnet werden. Die Füllhöhe F ergibt sich dann aus der Differenz zwischen der bekannten Einbauhöhe $H_0$ der Antenne 22 über dem Behälterboden 12 und der gemessenen Entfernung D:

$$F = H_0 - D.$$

Zur Auswertung der empfangenen Mikrowellen in der Empfangs- und Auswerteschaltung 28 wird üblicherweise das Echoprofil der Mikrowellen aufgezeichnet, das bei einem Pulsradar durch die Hüllkurve der Mikrowellen gegeben ist. Das Diagramm dieser Hüllkurve H als Funktion der Laufzeit t oder, was auf das gleiche hinausläuft, der von den Mikrowellen zurückgelegten Strecke x ist in Fig. 1 rechts von dem Behälter 10 dargestellt, wobei die Zeitachse t bzw. die Entfernungsachse x senkrecht nach unten gerichtet ist, während die Ordinate, die die Amplitude der Hüllkurve H darstellt, nach rechts gerichtet ist. Diese Art der Darstellung macht den Zusammenhang zwischen der Hüllkurve und der zu messenden Füllhöhe F deutlich. Die Hüllkurve H hat fast in dem gesamten Entfernungsbereich zwischen der der maximalen Füllhöhe $F_{max}$ entsprechenden Entfernung $D_{min}$ bis zu der der Einbauhöhe $H_0$ entsprechenden Entfernung $D_L$, die dem leeren Behälter entspricht und "Leerdistanz" genannt wird, einen verhältnismäßig niedrigen Wert R, der dem Rauschpegel entspricht; sie weist jedoch bei der Entfernung D, die dem Abstand der Füllgutoberfläche 16 von der Antenne 22 entspricht, eine wesentlich höhere Spitze E auf, die von den an der Füllgutoberfläche 16 reflektierten Echowellen stammt. Im Zeitmaßstab entspricht die Position der Echospitze E dem doppelten Wert der Laufzeit, die die Mikrowellen zum Durchlaufen der Strecke D benötigen, da sie diese Strek-

ke von der Antenne 22 zur Füllgutoberfläche 16 und wieder zurück zur Antenne 22 zweimal durchlaufen müssen.

Zur Bestimmung des Nutzechos E in der Hüllkurve H können verschiedene Verfahren angewendet werden. Ein erstes Verfahren besteht darin, daß das Maximum der Hüllkurve bestimmt und diesem das Nutzecho zugeordnet wird. Nach einem anderen Verfahren wird zusätzlich zu dem Echo mit der größten Amplitude, also dem Maximum der Hüllkurve, auch das zeitlich zuerst eintreffende Echo bestimmt. Wenn die Amplitude dieses ersten Echos größer als die um einen einstellbaren Faktor verringerte maximale Amplitude ist, wird das erste Echo als Nutzecho ausgewählt. Die Bedingung kann beispielsweise lauten, daß die Amplitude des ersten Echos größer als die um 20 dB verringerte maximale Amplitude sein muß. Die Bestimmung des Nutzechos erfolgt im normalen Meßbetrieb bei ganz oder teilweise gefülltem Behälter in dem Entfernungsbereich, der von der Entfernung 0 oder zumindest von der dem maximalen Füllstand entsprechenden Mindestentfernung $D_{min}$ bis zur Leerdistanz $D_L$ geht. Demzufolge braucht die Hüllkurve H dann auch nur in diesem Bereich aufgezeichnet zu werden.

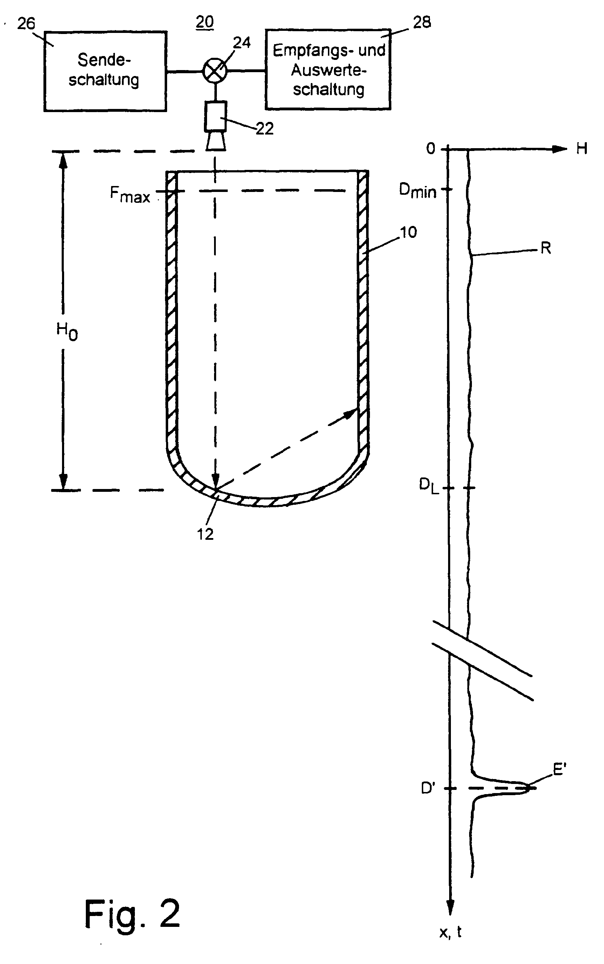

Fig. 2 zeigt die Anordnung von Fig. 1 für den Fall, daß der Behälter 10 vollständig leer ist. In diesem Fall werden die Mikrowellen am Behälterboden 12 reflektiert. Demzufolge müßte die Echospitze bei der Leerdistanz $D_L$ liegen. In Fig. 2 liegt aber die Echospitze E' bei einer wesentlich größeren Entfernung D'. Dies ist darauf zurückzuführen, daß die Mikrowellen an dem gekrümmten Behälterboden aufgrund des von 90° verschiedenen Einfallswinkels nicht direkt entgegen der Einfallsrichtung zur Antenne 22 reflektiert werden, sondern erst nach mehrfachen Reflexionen an den Behälterwänden zur Antenne 22 gelangen.

Da in der Empfangs- und Auswerteschaltung 28, wie zuvor erläutert wurde, im normalen Meßbetrieb die Hüllkurve der empfangenen Mikrowellen nur im Entfernungsbereich bis zur Leerdistanz $D_L$ ausgewertet wird, erscheint bei leerem Behälter infolge des gekrümmten Behälterbodens 12 in dem ausgewerteten Bereich keine Echospitze, so daß einerseits nicht erkennbar ist, daß der Behälter 10 leer ist, und andererseits der Eindruck entsteht, daß das Entfernungsmeßgerät 20 ausgefallen ist.

Diese Erscheinungen werden durch die folgenden Maßnahmen vermieden:

1. Wenn bei der Auswertung der Hüllkurve H festgestellt wird, daß in dem ausgewerteten Entfernungsbereich bis zur Leerdistanz $D_L$ kein Echo vorhanden ist, wird erneut eine Hüllkurve aufgezeichnet, jedoch für einen erweiterten Entfernungsbereich, der vorzugsweise dem maximalen Meßbereich des Entfernungsmeßgeräts entspricht. Wird bei der Auswertung der Hüllkurve in diesem erweiterten Entfernungsbereich jenseits der Leerdistanz $D_L$ ein Echo festgestellt, wie das Echo E' in Fig. 2, so wird diesem Echo nicht die seiner Laufzeit entsprechende Entfernung D' zugeordnet, sondern die Leerdistanz $D_L$. Dadurch wird einerseits richtig angezeigt, daß der Behälter leer ist, und andererseits festgestellt, daß das Entfernungsmeßgerät 20 richtig arbeitet.

2. Wenn auch bei der Auswertung der Hüllkurve in dem erweiterten Entfernungsbereich kein Echo festgestellt wird, wird ein Fehlerzustand angezeigt.

Auf diese Weise wird erreicht, daß die Auswertung der empfangenen Mikrowellen, beispielsweise durch Aufzeichnung ihrer Hüllkurve, im normalen Meßbetrieb auf den Bereich beschränkt ist, der der Höhe des Behälters entspricht, daß aber bei leerem Behälter trotz des gekrümmten Behälterbodens der Leerzustand richtig angezeigt wird und die irrtümliche Anzeige eines Fehlerzustands vermieden wird.

Die Auswertung der empfangenen Mikrowellen in dem erweiterten Entfernungsbereich kann zusätzlich an die Bedingung geknüpft werden, daß der zuletzt gemessene Füllstand kleiner als ein Referenzfüllstand war, der beispielsweise 20 % des maximalen Füllstands beträgt. Hierdurch wird vermieden, daß der Auswertungsbereich gewechselt wird, wenn das Echo kurzzeitig verloren geht, beispielsweise wegen eines den Weg der Mikrowellen kreuzenden Rührwerks.

Die Entscheidung, ob in dem erweiterten Entfernungsbereich ein Echo festgestellt wird oder ob ein Fehlerzustand angezeigt wird, kann von einem einstellbaren Schwellwert abhängig gemacht werden. Der Schwellwert gibt einen Mindestwert für den Rauschabstand (Verhältnis Signal/Rauschen) an, den die Echoamplitude übersteigen muß, um als Echo akzeptiert zu werden. Der Schwellwert liegt typischerweise in der Größenordnung von 10 dB.

Fig. 2 läßt auch die Definition der Leerdistanz $D_L$ erkennen. Sie entspricht der Entfernung von der Antenne 22 bis zu dem Punkt des gekrümmten Behälterbodens, an dem die von der Antenne 22 gesendeten Mikrowellen auftreffen und reflektiert werden. Diese Entfernung ist die maximale Entfernung, die mittels der Antenne 22 in dem Behälter 10 gemessen werden kann. Die durch den Auftreffpunkt gehende horizontale Ebene ist auch die Bezugsebene für die Füllhöhe F und die Einbauhöhe $H_0$. Der Behälter 10 gilt als leer, wenn die Füllgutoberfläche 16 in oder unter dieser Bezugsebene liegt.

Bei dem zuvor beschriebenen Ausführungsbeispiel erfolgt die Füllstandsmessung nach dem Pulsradarprinzip. Die Erfindung ist jedoch nicht auf diesen Fall beschränkt, sondern auch für andere nach dem Radarprinzip arbeitenden Verfahren geeignet, insbesondere für solche, bei denen ein Echoprofil erstellt werden kann. Dies gilt insbesondere für das FMCW-Radar (Frequenzmodulations-Dauerstrichradar). Bei dem FMCW-Verfahren wird eine kontinuierliche Mikrowelle ausgesendet, die periodisch linear frequenzmoduliert ist, beispielsweise nach einer Sägezahnfunktion. Die Frequenz jedes empfangenen Echosignals weist daher gegenüber der Augenblicksfrequenz, die das Sendesignal im Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne, und die Höhe der Frequenzkennlinie entspricht der Größe der Echoamplitude. Dieses Fourierspektrum stellt daher in diesem Fall das Echoprofil dar, das in gleicher Weise wie das beim Pulsradar erhaltene Echoprofil ausgewertet werden kann.

**Patentansprüche**

1. Verfahren zur Messung des Füllstands (16) eines Füllguts (14) in einem Behälter mit gekrümmtem Behälterboden, beispielsweise mit einem sogenannten Klöpperboden, nach dem Radarprinzip, bei welchem mittels der oberhalb der höchsten vorkommenden Füllhöhe ($F_{max}$) angeordneten Antenne (22) eines Entfernungsmeßgeräts (20) Mikrowellen nach unten ausgestrahlt und reflektierte Mikrowellen empfangen werden und die empfangenen Mikrowellen zur Bestimmung der an der Füllgutoberfläche (16) reflektierten Echowellen, zur Messung der Laufzeit der Echowellen (E) und zur Berechnung der Entfernung der Füllgutoberfläche von der Antenne des Entfernungmeßgeräts aus der gemessenen Laufzeit ausgewertet werden, wobei im normalen Meßbetrieb die empfangenen Mikrowellen in dem Entfernungsbereich bis zu der dem Abstand der Antenne des Entfernungsmeßgeräts vom Behälterboden entsprechenden Leerdistanz ausgewertet werden, **dardurch gekennzeichnet**, **daß** dann, wenn in diesem Entfernungsbereich keine Echowellen festgestellt werden, die Auswertung in einem erweiterten Entfernungsbereich erfolgt und die in diesem erweiterten Entfernungsbereich jenseits der Leerdistanz festgestellten Echowellen (E') der Leerdistanz zugeordnet werden.

2. Verfahren nach Anspruch 1, **dadurch gekennzeichnet, daß** der erweiterte Entfernungsbereich dem maximalen Entfernungsmeßbereich des Entfernungsmeßgeräts entspricht.

3. Verfahren nach Anspruch 1 oder 2, **dadurch gekennzeichnet, daß** zur Auswertung der empfangenen Mikrowellen deren Echoprofil in dem für die Auswertung vorgesehenen Entfernungsbereich aufgezeichnet wird.

4. Verfahren nach einem der vorhergehenden Ansprüche, **dadurch gekennzeichnet, daß** die Auswertung in dem erweiterten Entfernungsbereich nur dann erfolgt, wenn der zuvor gemessene Füllstand kleiner als ein vorgegebener Referenzfüllstand war.

5. Verfahren nach einem der vorhergehenden Ansprüche, **dadurch gekennzeichnet, daß** ein Fehlerzustand angezeigt wird, wenn in dem erweiterten Entfernungsbereich keine Echowellen festgestellt werden.

6. Verfahren nach einem der vorhergehenden Ansprüche, **dadurch gekennzeichnet, daß** in dem erweiterten Entfernungsbereich nur solche empfangenen Mikrowellen als Echowellen festgestellt werden, deren Amplitude einen vorgegebenen Schwellwert übersteigt.

**Claims**

1. Process for measuring the level (16) of a medium (14) in a tank (12) with a curved tank floor - with a dished end for example -, using the radar principle where microwaves are emitted downwards and reflected microwaves are received using the antenna (22) of a distance measuring unit (20) arranged above the highest possible level (Fmax). The microwaves received are analyzed to determine the echo waves reflected at the medium surface (16), to measure the time-of-flight of the echo waves (E) and to determine the distance of the surface of the medium from the antenna of the distance measuring unit from the time-of-flight measured whereby, in normal measuring operation, the microwaves received are evaluated in the distance range to the empty distance which corresponds to the distance of the antenna of the distance measuring unit from the tank floor, **characterized in that** if no echo waves can be determined in this distance range, the system then evaluates in an extended distance range and the echo waves (E') determined beyond the empty distance in this extended distance range are assigned to the empty distance.

2. Process as per Claim 1, **characterized in that** the extended distance range corresponds to the maximum distance measuring range of the distance measuring unit.

3. Process as per Claim 1 or 2, **characterized in that** to evaluate the microwaves received, the microwaves' echo profile is recorded in the distance range provided for the evaluation.

4. Process as per one of the previous Claims, **characterized in that** the evaluation only takes place in the extended distance range if the level measured beforehand is smaller than a specified reference level.

**5.** Process as per one of the previous Claims, **characterized in that** an error condition is indicated if no echo waves are determined in the extended distance range.

**6.** Process as per one of the previous Claims, **characterized in that** only received microwaves whose amplitude exceeds a specific threshold value are regarded as echo waves in the extended distance range.

**Revendications**

**1.** Procédé destiné à la mesure du niveau (16) d'un produit (14) au sein d'un réservoir (12) doté d'un fond de réservoir curviligne, par exemple un fond bombé, fontionnant d'après le principe du radar, pour lequel des micro-ondes sont émises vers le bas et des micro-ondes réfléchies sont reçues au moyen d'une antenne (22) d'un distancemètre (20), disposée au-dessus du niveau maximal ($F_{max}$) pouvant apparaître, et pour lequel les micro-ondes reçues sont exploitées pour la détermination des ondes d'écho réfléchies à la surface du produit (16), pour la mesure du temps de propagation des ondes d'écho (E) et pour le calcul de la distance de la surface du produit par rapport à l'antenne du distancemètre à partir du temps de propagation mesuré, procédé pour lequel, en mode de mesure normal, les micro-ondes reçues sont exploitées dans la plage de distance jusqu'à la distance "à vide" correspondant à la distance de l'antenne du distancemètre par rapport au fond du réservoir, **caractérisé en ce que**, si aucune onde d'écho n'est détectée dans cette plage de distance, l'exploitation s'effectue dans une plage de distance étendue et les ondes d'écho (E') détectées dans cette plage de distance étendue, au-delà de la distance "à vide", sont attribuées à la distance "à vide".

**2.** Procédé selon la revendication 1, **caractérisé en ce que** la plage de distance étendue correspond à la plage de mesure de distance maximale du distancemètre.

**3.** Procédé selon la revendication 1 ou 2, **caractérisé en ce que**, pour l'exploitation des micro-ondes reçues, leurs profil d'écho est enregistré dans la plage de distance prévue pour l'exploitation.

**4.** Procédé selon l'une des revendications précédentes, **caractérisé en ce que** l'exploitation dans la plage de distance étendue a uniquement lieu si le niveau préalablement mesuré était inférieur à un niveau de référence prédéfini.

**5.** Procédé selon l'une des revendications précédentes, **caractérisé en ce qu'**un état d'erreur est affiché lorsqu'aucune onde d'écho n'est détectée dans la plage de distance étendue.

**6.** Procédé selon l'une des revendications précédentes, **caractérisé en ce que**, dans la plage de distance étendue, seules sont détectées en tant qu'ondes d'écho les micro-ondes reçues, dont l'amplitude dépasse un seuil prédéfini.

Fig. 1

Fig. 2

**EP 0 882 957 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0591816 A2